# EUROPÄISCHE PATENTANMELDUNG

(11) **EP 1 527 872 A1**
(43) Veröffentlichungstag der Anmeldung: **04.05.2005**
(21) Anmeldenummer: 04019768.3
(22) Anmeldetag: 20.08.2004
(51) Int. Cl.: B32B 9/04, B32B 17/06, E04C 2/26, E04F 13/14, B44C 5/04, B28D 1/00

(54) **Verfahren zur Herstellung einer dekorativen Glasscheibe**

(30) Priorität: 28.10.2003 DE 10350271
(71) Anmelder: Klausmann, Bernhard, 77756 Hausach (DE)
(72) Erfinder: Klausmann, Bernhard, 77756 Hausach (DE)
(74) Vertreter: Maucher, Wolfgang, Dipl.-Ing.

(57) **Zusammenfassung**

Eine Glasscheibe (1) ist dadurch zumindest bereichsweise undurchsichtig, aber lichtdurchlässig, dass sie auf wenigstens einer Seite oder Oberfläche mit einer dünnen Granitsteinschicht (2) bekleidet oder versehen ist, deren Dicke so gering ist, dass sie Licht durchscheinen lässt. Diese Glasscheibe kann dadurch hergestellt werden, dass eine Glasscheibe und eine zunächst dicke Granitsteinschicht miteinander verbunden werden und danach die Granitsteinschicht auf eine Dicke von drei Viertel Millimeter oder weniger abgeschliffen wird. (Fig.2)

## Beschreibung

Die Erfindung betrifft ein Verfahren zur Herstellung einer zumindest bereichsweise undurchsichtigen, aber lichtdurchlässigen Glasscheibe, wobei auf wenigstens einer Seite der Glasscheibe eine Granitsteinschicht aufgeklebt oder auf eine Granitsteinschicht eine Glasscheibe aufgeklebt oder Glas aufgeschmolzen oder aufgegossen wird.

Eine lichtdurchlässige, aber vollständig undurchsichtige Glasscheibe als Verbundplatte aus Glas und Granit ist aus JP 07112507 A bekannt. Die Granitplatte ist dabei aus einem Granitstein in einer lichtdurchlässigen Dicke geschnitten und mit der Glasplatte durch einen Acrylharzkleber verbunden. Dies erfordert wegen der Brüchigkeit von Granit eine relativ dicke Granitplatte, sodass eine derartige Verbundplatte nur wenig Licht durchlassen kann, wobei gleichzeitig bei der Herstellung sorgfältig darauf geachtet werden muss, dass die Granitplatte nicht zerbricht.

Aus WO 03/018310 A1 ist ein Verfahren zur Herstellung einer Verbundplatte bekannt, bei welchem ein Steinmaterial, z.B. Marmor oder Granit, mit einer Glasscheibe über einen Zweikomponentenkleber verbunden wird. Dabei wird die Glasplatte verbogen und dann zunächst mittig aufgesetzt und durch Nachlassen der Verbiegung flächig mit der dünnen Steinplatte verbunden. Diese kann dabei aufgrund ihrer Unterstützung während des Auflegens der Glasplatte genügend dünn sein, um noch transluzent, also durchscheinend zu sein. Es ergibt sich jedoch bei dieser Verfahrensweise der zusätzliche Aufwand, die Glasplatte so erfassen zu müssen, dass sie zunächst gebogen werden kann.

Aus DE 196 13 439 ist ein Natursteinelement bekannt, das aus einer dünnen Natursteinplatte, z.B. Granit, und einer damit großflächig verbundenen Tragplatte aus Glas besteht, wobei dieses Natursteinelement die Glasplatte als Trägerplatte aufweist und nicht lichtdurchlässig ist.

Aus DE 101 09 425 A1 ist ein Verfahren zur Dünnbeschichtung mit granitartig strukturiertem glasgefülltem Polymerkunststein bekannt, sodass das Erzeugnis nicht der eingangs definierten Gattung entspricht.

Der Erfindung liegt die Aufgabe zugrunde, ein Verfahren der eingangs genannten Art zu schaffen, womit eine zumindest bereichsweise undurchsichtige, aber lichtdurchlässige Glasscheibe hergestellt werden kann, die auf wenigstens einer Seite eine Granitsteinschicht hat, welches einerseits möglichst wirtschaftlich durchführbar sein soll und andererseits eine einfach montierbare Glasscheibe ergibt, die je nach Bedarf unterschiedliche Lichtdurchlässigkeiten haben kann.

Zur Lösung dieser Aufgabe ist das eingangs definierte Verfahren dadurch gekennzeichnet, dass eine zunächst dicke Granitsteinschicht nach dem Verbinden mit dem Glas auf eine Dicke von dreiviertel Millimeter oder weniger abgeschliffen wird.

Es wird also zunächst eine Granitsteinschicht oder Granitsteinplatte ausreichender Dicke gefertigt, die gehandhabt werden kann und die dann mit der entsprechenden Glasscheibe verbunden werden kann oder die es aushält - nach entsprechender Vorwärmung - mit einer Glasschmelze bedeckt zu werden. Da für die erforderliche Stabilität dieser Ausgangs-Granitsteinschicht eine Dicke erforderlich ist, die die Anforderung an Lichtdurchlässigkeit nicht erfüllt, wird diese Granitsteinschicht anschließend auf eine je nach Bedarf an Lichtdurchlässigkeit unterschiedliche Dicke abgeschliffen.

Zweckmäßig ist es dabei, wenn die Granitsteinschicht - die zunächst zwei Millimeter oder drei Millimeter oder fünf Millimeter dick sein kann oder auch eine davon abweichende oder zwischen den genannten Maßen liegende Dicke haben kann - zunächst mit einer Schleifvorrichtung oder dergleichen auf nahezu die vorgegebene Dicke abgetragen und anschließend auf die endgültige Dicke feingeschliffen wird.

Die zunächst relativ dicke Granitsteinschicht kann also mit einer Schleifvorrichtung oder dergleichen abgeschliffen und anschließend auf die endgültige Dicke feingeschliffen werden. Dadurch kann die Granitsteinschicht gleichzeitig so geglättet werden, dass sie auch einfach zu reinigen ist.

Sowohl bei dem ersten als auch bei einem eventuellen zweiten Schleifvorgang kann die Granitsteinschicht auf bereichsweise unterschiedliche Dicken abgeschliffen werden und gegebenenfalls an bestimmten Bereichen oder Stellen der Glasscheibe völlig fehlen. Die Granitsteinschicht kann also stellenweise dünner als in Nachbarbereichen gemacht werden. Ferner können sogar ein oder mehrere Bereiche der Glasscheibe völlig von dem Granit befreit werden, wenn dadurch besondere Effekte oder stellenweise Durchsichtigkeit erzielt werden sollen.

Die Granitsteinschicht kann auf einen halben Millimeter oder weniger, vorzugsweise auf einen viertel, einen fünftel, einen sechstel oder einen zehntel Millimeter abgeschliffen werden. Dies führt zu einer ausreichenden Lichtdurchlässigkeit. Je dünner die Granitsteinschicht gemacht wird, umso mehr Licht wird durchgelassen und umso weniger ist dann die Glasscheibe als Sonnenschutz, umso mehr aber als dekorative Glasscheibe insbesondere auch im Zusammenwirken mit einer Lichtquelle geeignet. Versuche haben gezeigt, dass eine bessere Lichtdurchlässigkeit bei einer Dicke der Granitsteinschicht von etwa einem halben Millimeter oder weniger erreicht werden kann, wobei selbst sehr dünne Granitsteinschichten immer noch die Durchsichtigkeit verhindern. Soll eine starke Lichtabschirmung beispielsweise als Sonnenschutz erzielt werden, kann die Glasscheibe mit einer dickeren Granitsteinschicht versehen werden, ist aber das durch die erfindungsgemäß hergestellte Glasscheibe hindurch fallende Licht relativ schwach, kann eine entsprechend dünnere oder wesentlich dünnere Granitsteinschicht vorgesehen werden.

Versuche haben ergeben, dass die Dicke der Granitsteinschicht so gewählt werden kann, dass ein Viertel bis die Hälfte, beispielsweise ein Drittel des Lichts durch die Glasscheibe dringt, das von einer dahinter befindlichen Lichtquelle abgegeben wird.

Die Granitsteinschicht kann auf eine derartig geringe Dicke abgeschliffen werden, dass die Glasscheibe zusammen mit einem Klebstoff innerhalb den Einbautoleranzen von Glasscheiben liegt. Dadurch ist es möglich, die erfindungsgemäß hergestellte Glasscheibe wie übliche bekannte Glasplatten zu verbauen und zu befestigen und beispielsweise in einem Fenster- oder Türrahmen unterzubringen oder sie mit beliebigen Befestigungselementen je nach Anwendungszweck zu erfassen. In vorteilhafter Weise kann sie wie eine übliche Glassacheibe gehandhabt und eingebaut werden und bisher schon vorhandene Glasplatten einfach ersetzen, wobei deren Halterung unverändert übernommen werden kann.

Es sei noch erwähnt, dass die Granitsteinschicht mit einem Fräswerkzeug abgeschliffen werden kann. In der vorstehend erwähnten Schleifvorrichtung beziehungsweise anstelle dieser Schleifvorrichtung kann also auch ein Fräswerkzeug verwendet werden, um die zunächst dicke Granitsteinschicht auf das gewünschte geringere Dickenmaß zu bringen. Gegebenenfalls kann auch danach wiederum ein Feinschliff erfolgen

Nachstehend ist ein Ausführungsbeispiel der Erfindung anhand der Zeichnung näher beschrieben. Es zeigt in stark schematisierter schaubildlicher Darstellung:
- Fig. 1: eine an einer Seite oder Oberfläche mit Kleber beschichtete Glasscheibe und eine damit zu verbindende, an ihrer in Gebrauchsstellung freien Oberfläche unbearbeitete Granitsteinplatte,
- Fig. 2: die Glasscheibe und die Granitsteinplatte in verklebtem Zustand, wobei die dann freie Oberfläche der Granitsteinplatte abgeschliffen wird, sowie
- Fig. 3: eine erfindungsgemäße Glasscheibe, die aufgrund der abgeschliffenen und entsprechend dünnen Granitsteinplatte lichtdurchlässig aber undurchsichtig ist.

Eine im Ganzen mit 1 bezeichnete, in Fig. 3 dargestellte Glasscheibe ist in noch zu beschreibender Weise undurchsichtig, aber lichtdurchlässig, wobei die Undurchsichtigkeit an der einen ihrer beiden Oberflächen dadurch bewirkt wird, dass diese Oberfläche mit einer dünnen Granitsteinschicht 2 versehen oder verkleidet ist, deren Dicke so gering ist, dass sie - wie die eigentliche Glasscheibe 1, wenn auch im geringerem Maße - lichtdurchlässig ist.

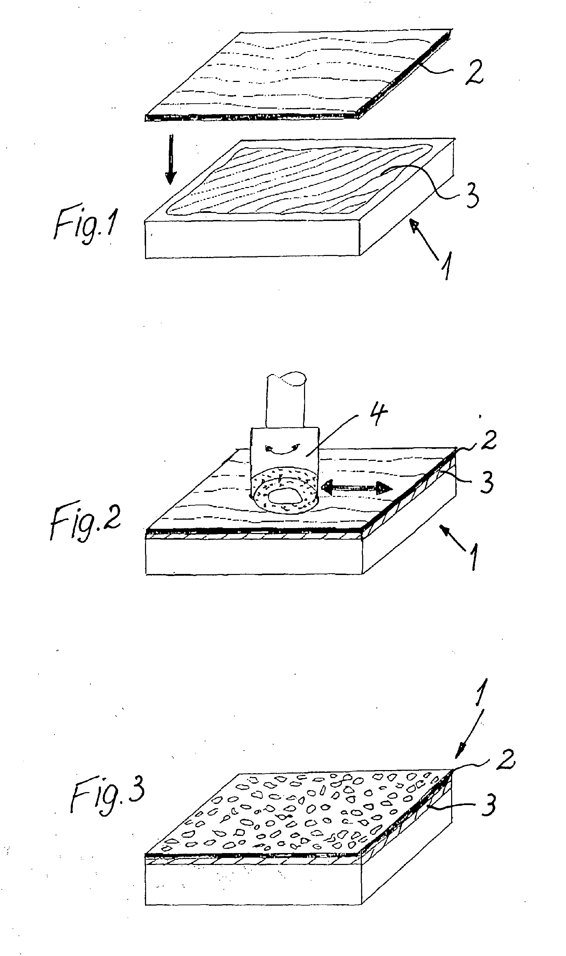

Dabei ist die Granitsteinschicht 2 gemäß Fig. 1 durch eine durchgehende und ununterbrochene dünne Granitplatte gebildet, die mit der Granitsteinschicht durch einen Zweikomponentenkleber 3 verbunden wird beziehungsweise in Endzustand verbunden ist. Es wäre aber auch denkbar, die Glasscheibe 1 dadurch zu bilden, dass auf die Granitsteinschicht 2 Glas aufgegossen und/oder aufgeschmolzen wird.

Als Klebstoff 3 zum Verbinden der Granitsteinschicht 2 mit der Glasscheibe 1 ist zweckmäßigerweise ein unter UV-Licht aushärtbarer Zweikomponentenklebstoff vorgesehen. Die in den Figuren etwas übertrieben dargestellt Dicke der Granitsteinschicht 2 kann dreiviertel Millimeter oder weniger, beispielsweise etwa einen halben Millimeter oder etwas mehr oder vor allem auch weniger, insbesondere sogar in der Größenordnung von etwa ein zehntel Millimeter und erforderlichenfalls noch weniger betragen. Es hat sich gezeigt, dass auch eine sehr dünne Granitsteinschicht 2 die Glasscheibe 1 undurchsichtig macht aber die Lichtdurchlässigkeit je nach Wahl der Dicke der Granitsteinschicht 2 beeinflusst werden kann.

Dabei kann die Granitsteinschicht 2 entgegen dem Ausführungsbeispiel bereichsweise unterschiedliche Dicken haben und gegebenenfalls an bestimmten Bereichen oder Stellen der Glasscheibe 1 vollständig fehlen, so dass dort entsprechend mehr Licht durchfallen kann oder ein Benutzer einen Durchblick haben kann.

Günstiger Weise ist die Dicke der Granitsteinschicht 2 zusammen mit der sehr dünnen, im Ausführungsbeispiel ebenfalls übertrieben dick gezeichneten Klebeschicht 3 so gering, dass sie innerhalb der Einbautoleranzen von Glasscheiben liegen, das heißt die fertige Glasscheibe 1 gemäß Fig.3 passt an die Stelle entsprechender durchsichtiger Glasscheiben und kann also bisher durchsichtige Glasscheiben ersetzen, ohne dass die Halterungen, Rahmen oder dergleichen geändert werden müssten.

Aus der gemeinsamen Betrachtungen der Fig. 1 bis 3 ergibt sich, dass zur Herstellung der zumindest bereichsweise undurchsichtigen, aber lichtdurchlässigen Glasscheibe 1 auf wenigstens einer Seite oder Oberfläche der Glasscheibe 1 eine Granitsteinschicht 2 aufgeklebt wird und dass anschließend die Granitsteinschicht auf eine Dicke abgeschliffen wird (Fig.2), bei welcher sie lichtdurchlässig ist. In Fig.2 ist ein Schleifwerkzeug 4 schematisiert angedeutet. Dieses könnte auch ein äquivalentes Fräswerkzeug sein.

Dabei kann die zunächst etwa zwei Millimeter oder etwa drei Millimeter oder etwa fünf Millimeter dicke Granitsteinschicht 2, die aber auch eine davon abweichende oder zwischen den genannten Maßen liegenden Dicke haben kann, nach dem Verbinden mit dem Glas zunächst mit einer Schleifvorrichtung 4 auf nahezu die angestrebte oder vorgesehene Dicke abgeschliffen und anschließend auf die endgültige Dicke feingeschliffen, wodurch sie gleichzeitig gegenüber ihrer ursprünglichen unbearbeiteten Oberfläche geglättet wird. Dadurch kommen dann auch die Strukturen des Granitsteins gut zum Vorschein und gut zur Geltung.

Die Glasscheibe 1 ist dadurch zumindest bereichsweise undurchsichtig, aber lichtdurchlässig, dass sie auf wenigstens einer Seite oder Oberfläche mit einer dünnen Granitsteinschicht 2 bekleidet oder versehen ist, deren Dicke so gering ist, dass sie Licht durchscheinen lässt. Diese Glasscheibe 1 kann also beispielsweise Milchglas oder strukturiertes Glas ersetzen.

## Patentansprüche

1. Verfahren zur Herstellung einer zumindest bereichsweise undurchsichtigen, aber lichtdurchlässigen Glasscheibe (1), wobei auf wenigstens einer Seite der Glasscheibe (1) eine Granitsteinschicht (2) aufgeklebt oder auf eine Granitsteinschicht (2) eine Glasscheibe (1) aufgeklebt oder Glas aufgeschmolzen oder aufgegossen wird, **dadurch gekennzeichnet, dass** eine zunächst dicke Granitsteinschicht (2)nach dem Verbinden mit dem Glas auf eine Dicke von dreiviertel Millimeter oder weniger abgeschliffen wird.

2. Verfahren nach Anspruch 1, **dadurch gekennzeichnet, dass** die Granitsteinschicht (2) zunächst mit einer Schleifvorrichtung (4) oder dergleichen auf nahezu die vorgegebene Dicke abgetragen und anschließend auf die endgültige Dicke feingeschliffen wird.

3. Verfahren nach Anspruch 1 oder 2, **dadurch gekennzeichnet, dass** die Granitsteinschicht (2) auf einen halben Millimeter oder weniger, vorzugsweise auf einen viertel, einen fünftel, einen sechstel oder einen zehntel Millimeter abgeschliffen wird.

4. Verfahren nach einem der Ansprüche 1 bis 3, **dadurch gekennzeichnet, dass** die Dicke der Granitsteinschicht(2) so gewählt wird, dass ein Viertel bis die Hälfte, beispielsweise etwa ein Drittel, des Lichtes durch die Glasscheibe dringt, das von einer dahinter befindlichen Lichtquelle abgegeben wird.

5. Verfahren nach einem der Ansprüche 1 bis 4, **dadurch gekennzeichnet, dass** die Granitsteinschicht (2) auf bereichsweise unterschiedliche Dicken abgeschliffen wird und gegebenenfalls an bestimmten Bereichen oder Stellen der Glasscheibe (1) vollständig fehlt.

6. Verfahren nach einem der Ansprüche 1 bis 5, **dadurch gekennzeichnet, dass** die Granitsteinschicht (2) auf eine derart geringe Dicke abgeschliffen wird, dass die Glasscheibe zusammen mit einem Klebstoff (3) innerhalb den Einbautoleranzen von Glasscheiben liegt.

7. Verfahren nach einem der vorstehenden Ansprüche, **dadurch gekennzeichnet, dass** die Granitsteinschicht mit einem Fräswerkzeug abgeschliffen wird.
